# EUROPÄISCHE PATENTANMELDUNG

(11) **EP 4 435 256 A1**
(43) Veröffentlichungstag der Anmeldung: **25.09.2024**
(21) Anmeldenummer: 23020151.9
(22) Anmeldetag: 23.03.2023
(51) Int. Cl.: F04B 15/08, F04B 37/18, F04B 37/20, F04B 39/06, F04B 39/12, F04B 53/16

(54) **PUMPE ZUM FÖRDERN EINES KRYOGENEN FLUIDS UND VERFAHREN ZUM FÖRDERN EINES KRYOGENEN FLUIDS**

(71) Anmelder: Linde GmbH, 82049 Pullach (DE)
(72) Erfinder: Reese Wilfried-Henning, 82049 Pullach (DE); Brücklmeier, Martin, 82049 Pullach (DE); Szardenings, Roland, 82049 Pullach (DE); Schäfer, Simon, 82049 Pullach (DE); Lachermeier, Armin, 82049 Pullach (DE); Schanda, Lukas, 82049 Pullach (DE); Westermeier, Michael, 82049 Pullach (DE)
(74) Vertreter: Zahn, Christoph

(57) **Zusammenfassung**

Die Erfindung betrifft eine Pumpe (200) zum Fördern eines kryogenen, die ein Pumpengehäuse (201) und einen Pumpeneinsatz (202) aufweist, wobei das Pumpengehäuse einen Außenbehälter (220) und einen Innenbehälter (221, 222) aufweist, wobei dazwischen ein evakuierbarer Raum (225) gebildet ist. Das Pumpengehäuse (201) weist einen Pumpeneinlass (261) auf, über den zu förderndes Fluid in den Innenbehälter bringbar ist. Der Pumpeneinsatz (202) weist mehrere Fördereinheiten (231, 232, 233), eine Antriebseinrichtung (210), mehrere Kolbenstangen (251, 252, 253) und eine Sammelleitung (262) auf, wobei die mehreren Fördereinheiten und ein Teil der Sammelleitung innerhalb des Innenbehälters angeordnet sind, wobei die Antriebseinrichtung (210) außerhalb des Pumpengehäuses (201) angeordnet ist, und über jeweils eine Kolbenstange an einen Kolben angebunden ist. Die Pumpe (200) ist für eine Förderung von Fluid über eine Zugbewegung der Kolbenstangen ausgebildet, wobei der Pumpeneinsatz (202) einen Pumpenauslass (222) aufweist, und wobei jede der mehreren Fördereinheiten jeweils einen Fördereinheiteneinlass (242) und einen Fördereinheitenauslass (243) für das Fluid aufweist, wobei die Fördereinheitenauslässe an die Sammelleitung angebunden sind, und wobei die Fluidsammelleitung derart ausgebildet ist, dass die Fördereinheitenauslässe in den Pumpenauslass münden. Die Erfindung betrifft auch ein Verfahren zum Fördern eines kryogenen Fluids.

## Beschreibung

Die Erfindung betrifft eine Pumpe zum Fördern eines kryogenen Fluids, insbesondere Wasserstoff, sowie ein Verfahren zum Fördern eines kryogenen Fluids mittels einer solchen Pumpe.

Fluide wie z.B. Wasserstoff können in vielen verschiedenen Anwendungen und auf vielen verschiedenen Gebieten eingesetzt werden. So kann Wasserstoff z.B. als Treibstoff für Fahrzeuge verwendet werden; hierzu kann der Wasserstoff über sog. Wasserstofftankstellen bereitgestellt werden. In vielen Fällen muss der Wasserstoff dabei gefördert werden, z.B. von einem Tank in einen anderen. Je nach Anwendung kann oder sollte dies bei tiefen Temperaturen erfolgen, d.h. es muss kryogener Wasserstoff gefördert werden. Vergleichbares gilt für anderen kryogene Fluide wie z.B. Stickstoff, Argon, Sauerstoff oder Helium.

Insbesondere bei der Förderung großer Mengen an Fluid ist eine hohe Förderrate wünschenswert, was aber insbesondere bei kryogenem Fluid schwierig sein kann. Vor diesem Hintergrund stellt sich die Aufgabe, eine effiziente Möglichkeit zur Förderung von kryogenem Fluid, insbesondere mit hoher Förderrate, bereitzustellen.

### Offenbarung der Erfindung

Diese Aufgabe wird durch eine Pumpe und ein Verfahren zum Fördern eines kryogenen Fluids mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung beschäftigt sich mit dem Fördern kryogener Fluide wie insbesondere Wasserstoff, also flüssigem Wasserstoff, auch unterkühltem flüssigem Wasserstoff. Die Erfindung lässt sich aber auch auf anderen kryogene Fluide wie z.B. Stickstoff, Argon, Sauerstoff oder Helium anwenden. Wie bereits erwähnt, ist für viele Anwendungen das Fördern kryogener Fluide nötig, z.B. von einem in einen anderen Tank, beispielsweise zum Betanken eines mittels Wasserstoff betriebenen Fahrzeugs. Insbesondere bei großen und/oder schweren Fahrzeugen wie z.B. LKWs können hierbei große Mengen an Wasserstoff zu fördern sein. Um eine möglichst kurze Betankungsdauer zu erreichen, sollte eine hohe Förderrate erreicht werden.

Hierfür wird nun eine Pumpe zum Fördern eines kryogenen Fluids vorgeschlagen, ebenso ein Verfahren zum Fördern eines kryogenen Fluids mittels einer solchen Pumpe. Nachfolgend sollen die Pumpe und das Verfahren, also die Verwendung oder der Betrieb der Pumpe, übergreifend beschrieben werden.

Die Pumpe weist ein Pumpengehäuse und einen Pumpeneinsatz auf. Das Pumpengehäuse wiederum weist einen Außenbehälter und einen Innenbehälter auf, wobei zwischen dem Außenbehälter und dem Innenbehälter ein Raum gebildet ist, der evakuiert oder evakuierbar ist. Damit kann das Innere des Innenbehälters gut isoliert werden. Das Pumpengehäuse weist zudem einen Pumpeneinlass auf, über den zu förderndes Fluid in den Innenbehälter bringbar ist. Der Pumpeneinlass kann also z.B. als Durchführung von außen durch eine Wand im Außenbehälter, durch den evakuierten Raum hindurch zu einer Wand des Innenbehälters ausgebildet sein.

Der Pumpeneinsatz weist mehrere Fördereinheiten, insbesondere drei oder mehr Fördereinheiten, auf, sowie eine Antriebseinrichtung, mehrere Kolbenstangen und eine Sammelleitung. Jede Fördereinheit weist jeweils einen Kolben und einen Zylinder (oder eine Kammer) auf, wobei der jeweilige Kolben innerhalb des jeweiligen Zylinders hin und her bewegbar angeordnet ist. Die Pumpe basiert also auf dem Prinzip einer Kolbenpumpe oder Hubkolbenpumpe. Die Antriebseinrichtung ist über jeweils eine der mehreren Kolbenstangen an jeweils einen der mehreren Kolben angebunden, wobei die Pumpe eingerichtet ist, mittels der Antriebseinrichtung jeden der mehreren Kolben innerhalb des jeweiligen Zylinders hin und her zu bewegen. Die Antriebseinrichtung kann z.B. elektrisch und/oder hydraulisch betrieben sein.

Jede der mehreren Fördereinheiten weist jeweils einen Fördereinheiteneinlass und einen Fördereinheitenauslass für das Fluid auf. Insbesondere kann der Fördereinheitenauslass jeweils ein Ventil aufweisen. Die Pumpe ist dabei derart ausgebildet, dass zu förderndes Fluid in jeden der Fördereinheiteneinlässe einbringbar ist, d.h. das Fluid kann in die jeweiligen Zylinder der Fördereinheiten einströmen, dies erfolgt typischerweise bei einem sog. Ladehub einer jeweiligen Fördereinheit, bei dem der Kolben den Fördereinheiteneinlass öffnet bzw. freigibt und so das Fluid in die Fördereinheit nachfließt. Da kryogener Wasserstoff in der Regel nahe des Siedepunkts oder am Siedepunkt vorliegt, ist es vorteilhaft, wenn das Fluid mit geringem Vordruck in die Fördereinheit einfließen kann und nicht angesaugt werden muss. Bei einem sog. Förderhub einer jeweiligen Fördereinheit, bei dem der Kolben z.B. zu dem Fördereinheitenauslass hin bewegt wird, kann das Fluid aus dem Zylinder mittels Überdruck wieder ausgestoßen werden. Die Fluidsammelleitung kann , z.B. in Form eines Verteilers ausgebildet sein, wobei die Fördereinheitenauslässe an die Sammelleitung angebunden sind. Die Fluidsammelleitung ist dabei derart ausgebildet, dass die Fördereinheitenauslässe in einen (gemeinsamen) Pumpenauslass münden, über den mittels der Pumpe gefördertes Fluid bereitstellbar ist. Der Pumpenauslass ist dabei Teil des Pumpeneinsatzes. Die Fluidströme aus den einzelnen Fördereinheitenauslässen werden also gesammelt bzw. zu einem gemeinsamen Fluidstrom vereint.

Die mehreren Fördereinheiten und wenigstens ein Teil der Sammelleitung sind dabei innerhalb des Innenbehälters angeordnet, während die Antriebseinrichtung außerhalb des Pumpengehäuses angeordnet ist. Durch die mehreren Fördereinheiten ist es möglich, ein insgesamt größeres Fördervolumen zu schaffen, um so eine höhere Förderrate der Pumpe zu ermöglichen. Trotzdem erlaubt das Prinzip der Kolbenpumpe eine einfache und robuste Funktionsweise, während andere Pumpenarten wie Rotationspumpen komplizierter und fehleranfälliger sind. Weiter erlauben Kolbenpumpe das Erreichen höherer Förderdrücke, während Rotationspumpen hier physikalisch bedingt begrenzt sind.

Zudem ist die Pumpe bzw. sind die mehreren Fördereinheiten jeweils für eine Förderung von Fluid über eine Zugbewegung einer jeweiligen Kolbenstange an dem jeweiligen Kolben ausgebildet. Damit kann z.B. vorgesehen seien, dass der Kolben das Fluid im Zylinder bei der Aufwärtsbewegung komprimiert, die Kolbenstange wird gezogen und nicht geschoben. Dies erlaubt die Verwendung langer oder gar besonders langer Kolbenstangen. Dadurch, dass eine Kraftbeaufschlagung der Kolbenstangen in deren Längsrichtung damit hauptsächlich auf Zug erfolgt, besteht keine oder kaum eine Gefahr, dass die Kolbenstangen abknicken. Lange Kolbenstangen wiederum bewirken, dass die Antriebseinrichtung möglichst weit von den Fördereinheiten beabstandet angeordnet werden kann, was eine Reduzierung eines Wärmeeintrags des Antriebseinrichtung auf das mittels der Fördereinheiten zu fördernde, kryogene Fluid ermöglicht. Vorzugsweise ist die Antriebseinrichtung beabstandet von den mehreren Fördereinheiten angeordnet, vorzugsweise mit einem Abstand von wenigstens 400 mm, insbesondere wenigstens 600 mm. Damit kann ein Wärmeeintrag gut vermieden werden.

Beim Eintritt in die Pumpe bzw. die Fördereinheiten befindet sich das kryogene Fluid, z.B. Wasserstoff, nämlich in der Regel nahe des Siedepunkts oder am Siedepunkt. Um ein Sieden von z.B. Wasserstoff zu vermeiden, muss der Wärmeeintrag in die Pumpe oder zumindest die Fördereinheiten minimiert werden, was durch die Verwendung sehr langer Kolbenstangen erreicht werden kann. Eine große Länge der Kolbenstangen reduziert den Wärmeeintrag aufgrund einer langen Wärmeleitstrecke. Zudem wird durch die Isolationswirkung des Vakuums zwischen Innen- und Außenbehälter der Wärmeeintrag minimiert.

Weiterhin ist die Pumpe derart ausgebildet, dass die mehreren Fördereinheiten und wenigstens ein Teil der Sammelleitung zum Fördern von Fluid in dem Fluid untergetaucht anordenbar ist. Insbesondere sind die entsprechenden Komponenten oder Teile der Pumpe, die in dem kryogenen Fluid untergetaucht anordenbar sind, entsprechend ausgebildet, tiefe Temperaturen von z.B. weniger als -90° oder auch bis hin zu -253°C auszuhalten und insbesondere dabei auch funktionsfähig zu sein und zu bleiben.

In einer Ausführungsform ist die Pumpe derart eingerichtet, dass die mehreren Kolben synchron und zueinander zeitlich versetzt bewegt werden. Dies kann z.B. durch entsprechende Anbindung der Kolbenstangen an die Antriebseinrichtung sowie ggf. eine geeignete Ausbildung der Antriebseinrichtung erreicht werden. Im Falle einer hydraulischen Antriebseinrichtung kann diese so ausgebildet sein, dass durch eine entsprechende Regulierung des Hydraulikölmassenstroms die Verfahrgeschwindigkeit der einzelnen Kolben eine sinusförmige Form aufweist, und dass die Kolben zeitlich versetzt zu einander bewegt werden. Weiter kann die Antriebseinrichtung z.B. eine geeignete Kurbelwelle (oder einen andere geeignete Konstruktion) aufweisen, an der die Kolbenstangen entsprechend angebunden sind. Dies führt zu einer synchronisierten Bewegung, z.B. Sinus-Bewegung, der Kolben, jeweils mit einer gewissen Zeitverzögerung zwischen den einzelnen Kolben. Dadurch kann eine möglichst kontinuierliche und gleichmäßige Durchflussmenge von Fluid am Pumpenauslass erzeugt werden.

Zum Fördern des Fluids kann die also Pumpe derart angeordnet werden, dass zumindest die Einlässe der mehreren Fördereinheiteneinlässen, vorzugsweise die mehreren Fördereinheiten, in dem kryogenen Fluid untergetaucht sind. Insbesondere kann die Pumpe auch dauerhaft oder zumindest auch außerhalb von Zeiten, in denen sie zum Fördern verwendet wird, entsprechend angeordnet sein. Auf diese Weise kann Pumpe sofort anlaufen und es ist keine Abkühlungszeit beim Anlaufen der Pumpe erforderlich.

Die Pumpe wird zum Fördern von Fluid derart angeordnet, dass sich die Antriebseinrichtung außerhalb des kryogenen Fluids befindet. Damit können eine sichere Funktion der Antriebseinrichtung und damit der Pumpe insgesamt sichergestellt werden. Wenngleich die Antriebseinrichtung damit auch für tiefe Temperaturen geeignet sein sollte, muss diese nicht derart tiefen Temperaturen widerstehen können wie die Fördereinheiten. Auch hier zeigt sich ein Vorteil der erwähnten langen Kolbenstangen, da damit nämlich erreicht werden kann, dass einerseits die Fördereinheiten ausreichend weit in das kryogene Fluid eingetaucht werden können, andererseits aber die Antriebseinrichtung ausreichend weit vom kryogenen Fluid beanstandet angeordnet werden kann.

Weiterhin weist der Pumpeneinsatz mehrere Zugstangenhülsen auf, die zwischen der Antriebseinrichtung und den mehreren Fördereinheiten angeordnet sind. Dabei ist zumindest ein Abschnitt einer jeden der mehreren Zugstangen innerhalb zumindest einer jeweiligen der mehreren Zugstangenhülsen angeordnet, und die mehreren Fördereinheiten sind über die mehreren Zugstangenhülsen zumindest mittelbar an der Antriebseinrichtung befestigt, insbesondere aufgehängt. Der Pumpeneinsatz weist auch mehrere Dichtungen auf, wobei jede der mehreren Zugstangen jeweils mit wenigstens einer der mehreren Dichtungen innerhalb zumindest einer jeweiligen der mehreren Zugstangenhülsen abgedichtet ist. Dies erlaubt eine gute Wärmeisolation bzw. eine weitere Reduzierung des Wärmeintrags.

Zudem weist der Innenbehälter einen Zugabschnitt (z.B. ein sog. Zugrohr) und einen Fördereinheitenaufnahmeabschnitt auf, wobei der Fördereinheitenaufnahmeabschnitt mittels des Zugabschnitts an einer Oberseite des Außenbehälters aufgehängt ist. Die Fördereinheiten können dann insbesondere in dem Fördereinheitenaufnahmeabschnitt angeordnet sein, der zudem als ein Reservoir für das Fluid dienen kann. Damit wird der Wärmeintrag auf das Fluid noch weiter reduziert. Insbesondere können Wände des Zugabschnitts z.B. besonders dünn ausgebildet sein, um den Wärmeeintrag so gering als möglich zu halten.

In einer Ausführungsform ist zumindest eine der mehreren Fördereinheiten, vorzugsweise aber alle, derart eingerichtet, dass in dem jeweiligen Zylinder vorhandenes, gasförmiges Fluid bei einem Ladehub aus der jeweiligen Fördereinheit entweichen kann. Hierzu kann der jeweilige Zylinder bevorzugt einen Zylinderkopf und eine Schiebehülse aufweisen, und derart ausgebildet sein, dass bei dem Ladehub ein Entgasungsspalt zwischen dem Zylinderkopf und der Schiebehülse gebildet wird, über den das gasförmige Fluid entweichen kann. Auf diese Weise kann eine möglichst vollständige Füllung der Fördereinheit mit flüssigem Fluid erfolgen. Ebenso kann aber vorgesehen sein, dass die jeweilige Fördereinheit ein während des Ladehubs aktiv oder passiv öffnendes Ventil aufweist, das z.B. in dem Fördereinheiteneinlass der jeweiligen Fördereinheit angeordnet sein kann.

In einer Ausführungsform ist die Pumpe für einen Betrieb mit einer Bewegung der Kolben in senkrechter Richtung eingerichtet. Hierunter ist insbesondere zu erstehen, dass dann, wenn die Pumpe zum Betrieb aufgestellt ist, die Zylinder senkrecht ausgerichtet sind, sodass die Kolben senkrecht nach oben und unten bewegt werden. Dies reduziert die konvektive Wärmeübertragung vom Innenbehälter zu den Kolbenstangen bzw. einer Durchführung der Kolbenstangen.

Weiterhin kann vorgesehen sein, dass der Pumpeneinsatz eine Dichtscheibe aufweist, durch die die mehreren Zugstangen geführt sind, wobei die Dichtscheibe den Fördereinheitenaufnahmeabschnitt abdichtet. Dies erlaubt es, Wärmeübertrag durch gasförmiges Fluid zu reduzieren.

In einer Ausführungsform weist das Pumpengehäuse einen Gasauslass auf, über den gasförmiges Fluid aus den Innenbehälter ausbringbar ist. Der Gasauslass kann, ähnlich wie auch der Pumpeneinlass, z.B. als Durchführung von innen durch eine Wand im Innenbehälter, durch den evakuierten Raum hindurch zu einer Wand des Außenbehälters ausgebildet sein. Der Gasauslass sollte dabei weit oben am Innenbehälter angeordnet sein, d.h. dort, wo das Fluid auch gasförmige vorliegt. Damit kann Boil-Off-Gas einfach rückgeführt werden. Denkbar ist, dass hierzu auch ein Regelventil am Gasauslass vorgesehen ist.

Besonders bevorzugt ist es, wenn der Pumpeneinsatz entnehmbar in dem Pumpengehäuse angeordnet ist. Damit kann der Pumpenseinsatz bei Bedarf z.B. gewechselt oder für Wartungsmaßnahmen entnommen werden.

In einer Ausführungsform weist die Pumpe ein gesamtes Fördervolumen der mehreren Fördereinheiten von mehr als 1,5 I auf. Hierfür können die einzelnen Fördereinheiten sowie dort wiederum die Zylinder und Kolben entsprechende Abmessungen aufweisen. Bei höherer Anzahl an Fördereinheiten können die einzelnen Fördereinheiten z.B. etwas kleiner ausgeführt sein, um trotzdem ein insgesamt hohes Fördervolumen zu erreichen. Das Fördervolumen einer einzelnen Fördereinheit ist dabei das zwischen unterem und oberem Totpunkt des Kolbens im Zylinder eingeschlossene Volumen zu verstehen. Ein hohes gesamtes Fördervolumen der Pumpe erlaubt eine geringe bzw. niedrige Betriebsfrequenz der Pumpe, um trotzdem eine hohe Förderrate der Pumpe zu erreichen. Eine geringe Betriebsfrequenz wiederum bedeutet eine langsame Bewegung der Kolben in den Zylindern. Die Vorteile der langsamen Bewegung in Kombination mit den entsprechenden Fördervolumina sind ein relativ geringer Wärmeeintrag durch Reibung und ein hoher Beladungsgrad der Zylinder mit Fluid aufgrund der geringen Fließgeschwindigkeit des Fluids, wenn dieses z.B. in die Fördereinheiten (d.h. in die Fördereinheiteneinlässe) strömt.

Besonders bevorzugt ist es, wenn die Pumpe mit einer Betriebsfrequenz von höchstens 5 Hz, bevorzugt höchstens 3 Hz, betrieben wird. Denkbar sind aber z.B. auch nur 1,5 Hz. Unter einer Betriebsfrequenz der Pumpe ist dabei eine Frequenz zu verstehen, mit welcher ein Kolben im Zylinder einen vollen Hub vom unteren Totpunkt zum oberen Totpunkt und wieder zurück zum unteren Totpunkt vollführt. Bei einer direkten Anbindung der Kolben über die Kolbenstange an die erwähnte Kurbelwelle der Antriebseinrichtung entspricht die Betriebsfrequenz einer Rotationsfrequenz der Kurbelwelle. Zudem kann das kryogene Fluid mittels der Pumpe z.B. bei einem Druck von höchstens 20 bar gefördert werden. Denkbar sind jedoch auch höhere Drücke.

Die erwähnte und hier bevorzugten Werte der Betriebsfrequenz sind für eine Kolbenpumpe besonders niedrig, durch die Kombination mit dem hohen gesamten Fördervolumen kann aber trotzdem eine insgesamt besonders hohe Förderrate erreicht werden, wie sie z.B. für Schwerlastanwendungen erforderlich oder zumindest wünschenswert sind. Der Wärmeeintrag bleibt, wie erwähnt, trotzdem niedrig, was die Effizienz steigert. Für das Beispiel von Wasserstoff als kryogenem Fluid ergibt sich bei einer Betriebsfrequenz von 1,5 Hz und dem gesamten Fördervolumen von 1,5 I, unter der Annahme einer Dichte des kryogenen Wasserstoffs von ca. 71 kg/m3, eine Förderrate von ca. 575 kg/h. Insbesondere ist es bevorzugt, wenn die Pumpe unter Berücksichtigung möglicher interner Verlustmassenströme z.B. über Dichtungssysteme bei einer Betriebsfrequenz von 3 Hz oder weniger eine Förderrate von 400 kg/h oder mehr, z.B. mindestens 600 kg/h, erreicht, was durch ein entsprechendes gesamtes Fördervolumen erreicht wird.

Die Förderrate lässt sich bei der vorgeschlagenen Art der Pumpe aufgrund des Aufbaus der Pumpe besonders einfach erhöhen, indem z.B. einfach mehr Fördereinheiten vorgesehen werden. Denkbar ist auch ein Aufbau der Pumpe, bei der einzelne oder mehrere aller vorhandenen Fördereinheiten gezielt zu- und abschaltbar sind, um die Förderrate je nach Bedarf verändern zu können. Hierzu kann dann z.B. die Antriebseinrichtung entsprechend ausgebildet sein, z.B. mit separaten Antriebseinheiten für einzelne oder jeweils mehrere der vorhandenen Fördereinheiten.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnung
- Figur 1: zeigt schematisch eine Anlage bei der eine erfindungsgemäße Pumpe zum Einsatz kommen kann.
- Figur 2a: zeigt schematisch eine erfindungsgemäße Pumpe in einer bevorzugten Ausführungsform.
- Figur 2b: zeigt schematisch ein Pumpengehäuse der Pumpe aus Figur 2a.
- Figur 2c: zeigt schematisch einen Pumpeneinsatz der Pumpe aus Figur 2a.
- Figur 2d: zeigt schematisch eine Fördereinheit der Pumpe aus Figur 2a in einer detaillierteren Ansicht.

### Ausführliche Beschreibung der Zeichnung

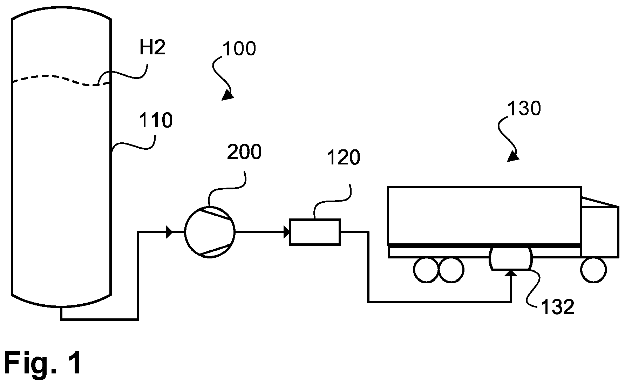

In Figur 1 ist schematisch eine Anlage 100 gezeigt, bei der eine erfindungsgemäße Pumpe zum Einsatz kommen kann, d.h. es handelt sich um eine Anwendung, bei der kryogenes Fluid mittels der Pumpe gefördert wird. Die Anlage 100 weist einen Vorratstank oder Speichertank 110 für beispielhaft flüssigen Wasserstoff H2 als kryogenes Fluid auf. Der Wasserstoff kann in dem Speichertank 110 z.B. bei einem Druck von 2 bis 3 barg in flüssiger Form gespeichert sein.

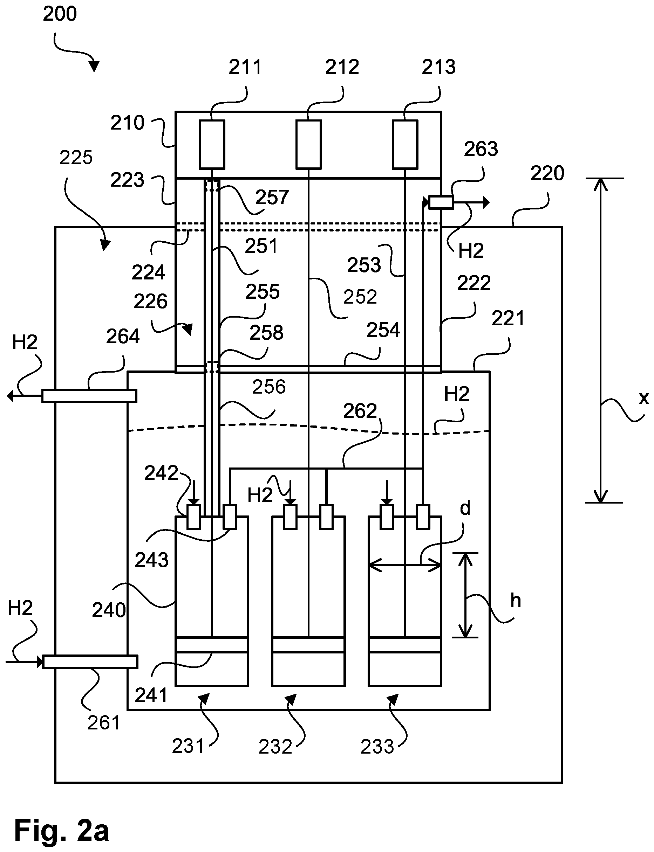

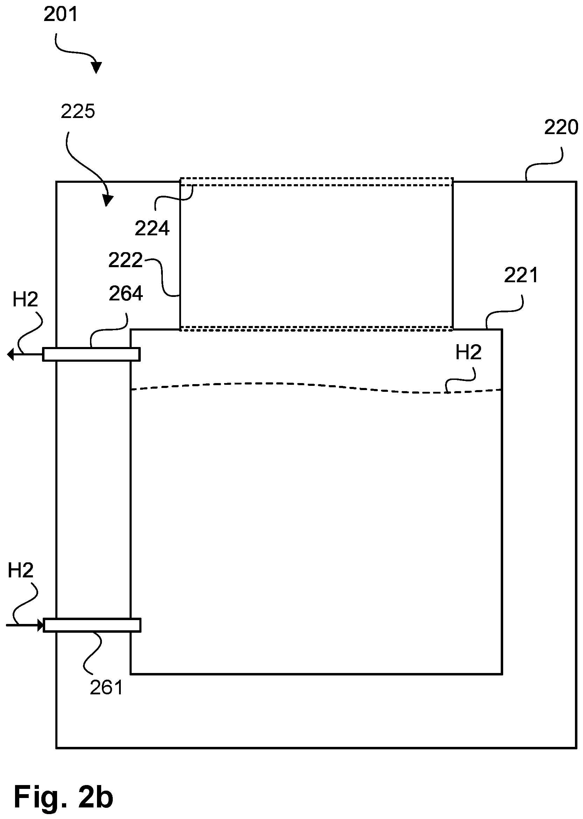

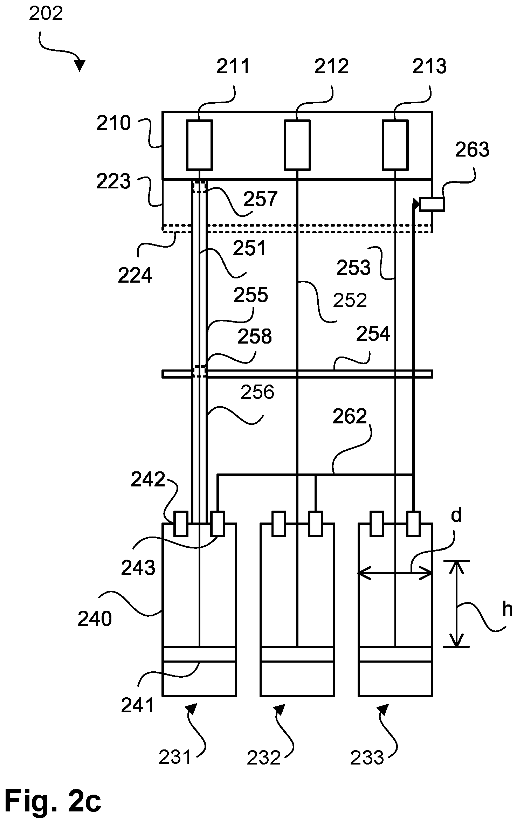

Weiterhin weist die Anlage 100 eine erfindungsgemäße Pumpe 200 in einer bevorzugten Ausführungsform auf. Die Pumpe 200 ist hier nur symbolisch angedeutet und soll in Bezug auf die Figuren 2a, 2b, 2c im Detail erläutert werden. Die Pumpe 200 kann über eine Leitung aus dem Speichertank 110 mit Wasserstoff H2 versorgt werden. Weiterhin weist Anlage 100 eine Kupplung 120 auf, die über eine weiter Leitung mit der Pumpe 200 verbunden ist.

Mittels der Kupplung 120 kann die Leitung an z.B. einen Tank 132 eines Fahrzeugs 130 angeschlossen bzw. angekuppelt werden. Bei dem Tank 132 des Fahrzeugs kann es sich insbesondere um einen Tank für Wasserstoff als Kraftstoff zum Antrieb des Fahrzeugs 130 handeln. Als Fahrzeug kommt insofern insbesondere z.B. ein LKW in Betracht, zumal LKWs große Mengen an Wasserstoff für den Antrieb benötigen, die mit der vorgeschlagenen Pumpe in kurzer Zeit transferiert werden können. Es sei erwähnt, dass der Wasserstoff aber auch zu anderen Arten von Tanks transfiert werden kann, z.B. mobile Speichertanks zum Transport oder auch für andere Anwendungen.

Es sei erwähnt, dass die Anlage 100 noch weitere Komponenten umfassen kann, z.B. verschiedene Ventile oder Messtechnik wie z.B. ein Durchflussmesser. Vielmehr soll lediglich beispielhaft ein möglicher und bevorzugter Anwendungsfall für die vorgeschlagene Pumpe 200 erläutert werden. Es kann also mittels der Pumpe 200 kryogener Wasserstoff aus dem Speichertank 110 in den Tank 132 gefördert werden.

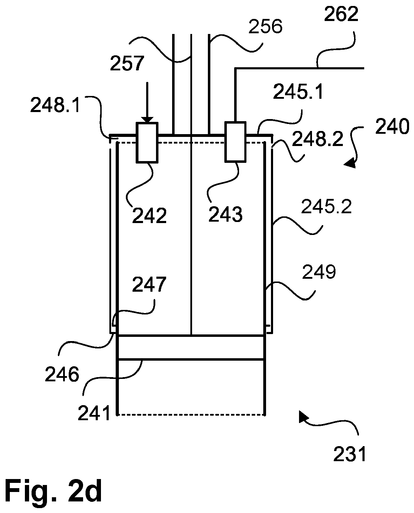

In Figur 2a ist schematisch eine erfindungsgemäße Pumpe in einer bevorzugten Ausführungsform dargestellt. Es handelt sich um die schon in Figur 1, dort aber nur symbolisch, gezeigte Pumpe 200. Die Pumpe 200 weist ein Pumpengehäuse 201 und einen Pumpeneinsatz 202 auf, die jeweils verschiedene Komponenten der gesamten Pumpe 200 umfassen. Während in Figur 2a die gesamte Pumpe 200 gezeigt ist, sind in der Figur 2b nur das Pumpengehäuse 201 und in Figur 2c nur der Pumpeneinsatz 202 gezeigt. In Figur 2d ist eine Fördereinheit der Pumpe 200 in einer detaillierteren Ansicht gezeigt. Die Figuren 2a, 2b, 2c und 2d sollen nachfolgend übergreifend beschrieben werden.

Das Pumpengehäuse 201 weist einen Außenbehälter 220 und einen Innenbehälter auf. Der Innenbehälter wiederum weist einen Fördereinheitenaufnahmeabschnitt 221 und einen Zugabschnitt 222 auf. Der Fördereinheitenaufnahmeabschnitt 221 ist dabei mittels des Zugabschnitts 222 an einer Oberseite des Außenbehälters 220 aufgehängt, z.B. an einem Flansch 224. Zwischen dem Außenbehälter 220 und dem Innenbehälter ist bzw. wird dabei ein Raum 225 gebildet, der evakuiert ist oder der evakuierbar ist sowie z.B. mit vakuumgeeigneter Multi-Layer-Isolation (MLI) versehen werden kann. Unter evakuieren soll dabei verstanden werden, dass ein allenfalls sehr geringer Druck von verbleibendem Gas vorliegt. Damit ist das Innere des Innenbehälters bzw. insbesondere des Fördereinheitenaufnahmeabschnitts 221 gut nach außen isoliert.

Das Pumpengehäuse 201 weist einen Pumpeneinlass 261 auf, über den zu förderndes Fluid H2, und zwar insbesondere in flüssiger Form, in den Innenbehälter, dort insbesondere den Fördereinheitenaufnahmeabschnitt 221, bringbar ist. Der Pumpeneinlass 261 ist z.B. als Durchführung von außen durch eine Wand im Außenbehälter 220, durch den evakuierten Raum 225 hindurch zu einer Wand des Innenbehälters ausgebildet.

Zudem weist das Pumpengehäuse 201 einen Gasauslass 264 auf, über den gasförmiges Fluid H2 aus den Innenbehälter ausbringbar ist. Der Gasauslass ist z.B. als Durchführung von innen durch eine Wand im Innenbehälter, durch den evakuierten Raum 225 hindurch zu einer Wand des Außenbehälters 220 ausgebildet. Der Gasauslass 24 ist dabei weit oben am Innenbehälter angeordnet, d.h. dort, wo das Fluid auch gasförmig vorliegt. Damit kann Boil-Off-Gas einfach rückgeführt werden. Denkbar ist, dass hierzu auch ein Regelventil am Gasauslass vorgesehen ist. Mittels einer gestrichelten Linie ist in den Figuren 2a, 2b beispielhaft ein Flüssigkeitslevel von flüssigem Fluid H2 angedeutet.

Der Pumpeneinsatz 202 weist mehrere Fördereinheiten, hier beispielhaft drei Fördereinheiten 231, 232, 233 auf. Die Fördereinheiten 231, 232, 233 können an sich gleichartig aufgebaut sein, sodass nachfolgend beispielhaft nur die Fördereinheit 231 näher beschrieben werden soll. Die Fördereinheit 231 weist einen Kolben 241 und einen Zylinder 240 auf, wobei der Kolben 241 innerhalb des Zylinders 240 hin und her bewegbar angeordnet ist.

In Figur 2d ist eine beispielhafte Ausgestaltung der Fördereinheit 231 mit mehr Details gezeigt. Der Zylinder 240 weist hierbei eine Schiebehülse 249, einen Zylinderkopf 245.1 und ein Zylindergehäuse 245.2 auf. auf. Zylinderkopf 245.1 und Zylindergehäuse 245.2 können ein gemeinsames Bauteil oder eine Baueinheit sein. Die Zylinderhülse 249 ist die nach oben offen. Der obere Rand der Schiebehülse 249 wird bei einer Aufwärtsbewegung z.B. an den Zylinderkopf 245.1 gedrückt, und dichtet dabei ab. Nach unten kann die Schiebehülse 249 ebenfalls offen sein. Dabei ist die Schiebehülse 249 in der Zylindergehäuse 245.2 beweglich gelagert, das Zylindergehäuse 245.2 umgibt die Schiebehülse 249. Dabei wird eine gewisse, im gezeigten Fall vertikale, Bewegung, der Schiebehülse 249 erlaubt. Die vertikale Bewegung der Schiebehülse 249 ist nach unten durch einen mechanische Anschlag 246 am Zylindergehäuse 245.2 und einen korrespondierenden mechanischen Anschlag 247 an der Schiebehülse 249 begrenzt. Beide Anschläge sind hier mit einem gewissen Spalt gezeigt, was nur der Veranschaulichung dient. In der Praxis sollte hier abgedichtet sein. In dem gezeigten Fall ist der Kolben 241 innerhalb des Zylinders 240 bzw. der Schiebehülse 249 auf und ab, d.h. in vertikaler Richtung bei zum Betrieb aufgestellter Pumpe, bewegbar. Die Pumpe basiert also auf dem Prinzip einer Kolbenpumpe bzw. Hubkolbenpumpe.

Weiterhin weist der Pumpeneinsatz 202 eine Antriebseinrichtung 210 und mehrere Kolbenstangen 251, 252, 253 auf, wobei die Antriebseinrichtung 210 über jeweils eine der mehreren Kolbenstangen an jeweils einen der mehreren Kolben angebunden ist. Die Pumpe 200 ist eingerichtet, mittels der Antriebseinrichtung 210 jeden der mehreren Kolben innerhalb des jeweiligen Zylinders hin und her - im gezeigten Fall auf und ab - zu bewegen. Die Antriebseinrichtung 210 kann z.B. elektrisch und/oder hydraulisch betrieben sein. In dem gezeigten Beispiel weist die Antriebseinrichtung 210 drei Antriebseinheiten 211, 212, 213 auf, wobei jede einer Kolbenstange bzw. einem Kolben zugeordnet ist. Bei den Antriebseinheiten kann es sich z.B. jeweils um einen Elektro- oder Hydraulikmotor handeln. Wie bereits erwähnt, können alle Kolbenstangen aber auch z.B. an eine gemeinsame Kurbelwelle oder dergleichen angebunden sein, die dann z.B. mittels nur einer Antriebseinheit angetrieben, insbesondere rotiert, wird. Es versteht sich, dass die Antriebseinheiten 211, 212, 213 nicht in einer Linie zueinander angeordnet sein müssen. Dies gilt dann entsprechend für die Fördereinheiten.

Die Antriebseinrichtung 210 ist insbesondere dazu eingerichtet, mit einer Betriebsfrequenz von bis zu 5 Hz oder bis zu 3 Hz oder auch nur bis zu 2 Hz zu arbeiten; dies ist für eine Kolbenpumpe, wie erwähnt, relativ langsam. Je nach Art der Antriebseinrichtung oder der Antriebseinheiten kann hierzu z.B. eine Übersetzung über ein Getriebe nötig sein.

Der Pumpeneinsatz 202 weist beispielhaft einen Stützring 223 auf, mittels dessen die Antriebseinrichtung 210 auf dem Pumpengehäuse 201, dort deren Oberseite, insbesondere an dem Flansch 224, abgestützt ist.

Die Fördereinheit 231 weist zudem einen Fördereinheiteneinlass 242 und einen Fördereinheitenauslass 243 für das Fluid auf. Sowohl der Fördereinheiteneinlass 242 als auch der Fördereinheitenauslass 243 können z.B. jeweils ein Ventil aufweisen. Auf diese Weise kann z.B. über den Fördereinheiteneinlass 242 nur in einem sog. Ladehub Fluid durch den sich dann öffnenden Fördereinheiteneinlass 242 einströmen. Das Ventil des Fördereinheitenauslasse 243 bleibt dann aktiv oder passiv geschlossen. Bei der gezeigten Pumpe 200 wird ein Ladehub durch eine Bewegung des Kolbens 241 nach unten durchgeführt. Das Fördervolumen der Fördereinheit 231 befindet sich also im oberen Teil des Zylinders 240, zwischen Kolben 241 und Fördereinheiteneinlass 242 sowie Fördereinheitenauslass 243.

Im Ladehub bewegt sich, wie in Figur 2d zu sehen ist, sowohl durch Schwerkraft als auch durch Reibkraft des Kolbens 241 an der Innenwand der Schiebehülse 249 die Schiebehülse 249 bis zum Anschlag nach unten. Dadurch wird zwischen der Schiebehülse 249 und dem Zylinderkopf 245.1 ein Spalt frei, ein sog. Entgasungsspalt, hier mit 248.1 bezeichnet. Durch diesen Spalt 248.1 kann eine ggf. vorhandene Restmenge an gasförmigen Wasserstoff aus dem vorhergehenden Förderhub aus dem Zylinder 240 bzw. der Schiebehülse 249 und über Öffnungen 248.2 im Zylindergehäuse 245.2 entweichen. Somit wird im aktuellen Ladehub eine möglichst vollständige Füllung mit flüssigem Wasserstoff der Fördereinheit und damit eine hohe Förderleistung der Pumpe 200 erreicht. Als Variante oder zusätzlich hierzu kann z.B. vorgesehen sein, die Entgasung auch über den Fördereinheiteneinlass 242 durch ein aktiv oder passiv öffnendes Ventil zu realisieren.

Es sei erwähnt, dass Fördereinheiteneinlass 242 und Fördereinheitenauslass 243 hier nur beispielhaft angedeutet sind. Der Fördereinheiteneinlass könnte z.B. auch dadurch gebildet sein, dass die Unterseite des Zylinders 240 offen ist und der Kolben 241 derart ausgebildet ist, dass bei einer Bewegung des Kolbens nach unten dieser eine Öffnung bildet, durch die Fluid von unten in das Fördervolumen einströmen kann.

In einem sog. Förderhub kann dann, wenn in dem Zylinder ein Überdruck erzeugt wird, Fluid durch das sich dann passiv öffnende oder aktiv zu öffnende Ventil des Fördereinheitenauslasses 243 ausgestoßen werden. Das Ventil des Fördereinheiteneinlasses 242 bleibt dann geschlossen. Bei der gezeigten Pumpe 200 wird ein Förderhub durch eine Bewegung des Kolbens 241 nach oben durchgeführt.

Bei dem gezeigten Beispiel der Pumpe 200 ist die Fördereinheit 231 zudem für eine Förderung von Fluid über eine Zugbewegung der Kolbenstange 251 an dem Kolben 241 ausgebildet. Eine Zugbewegung entspricht in diesem Beispiel einer Aufwärtsbewegung. Durch die Zugbewegung wird also der Förderhub durchgeführt, während durch eine Druckbewegung (hier eine Abwärtsbewegung) ein Ladehub durchgeführt wird. Da bei einem Förderhub eine größere Krafteinwirkung auf die Kolbenstange erfolgt als bei einem Ladehub (da in dem Fluid ein Druck aufgebaut werden muss), führt diese Anordnung dazu, dass auch bei langer Kolbenstange ein Knicken der Kolbenstange nicht vorkommt oder höchst unwahrscheinlich ist.

Die Erläuterungen für die Fördereinheit 231 gelten gleichermaßen für die Fördereinheiten 232, 233. Ein Fördervolumen einer jeden Fördereinheit ergibt sich durch die Volumendifferenz des Volumens, das der Kolben in dem Zylinder begrenzt, bei minimalem und maximalem Kolbenhub. Die Differenz zwischen minimalem und maximalem Kolbenhub ist die Hubhöhe h, wie beispielhaft für die Förderreinheit 233 gezeigt. Basierend auf der Hubhöhe h und einem Durchmesser d des Zylinders kann dann das Fördervolumen bestimmt werden.

Weiterhin weist der Pumpeneinsatz 202 eine Sammelleitung 262 auf, wobei die Fördereinheitenauslässe von allen Fördereinheiten 231, 232, 233 an die Sammelleitung 224 angebunden sind. Die Fluidsammelleitung 224 ist dabei derart ausgebildet, dass die Fördereinheitenauslässe in einen gemeinsamen Pumpenauslass 263 münden, über den mittels der Pumpe 200 gefördertes Fluid bereitstellbar ist. Die Fluidströme aus den einzelnen Fördereinheitenauslässen werden also gesammelt bzw. zu einem gemeinsamen Fluidstrom vereint.

Die mehreren Fördereinheiten 231, 232, 233 und wenigstens ein Teil der Sammelleitung 262 sind innerhalb des Innenbehälter und dort wiederum innerhalb des Fördereinheitenaufnahmeabschnitts 221 angeordnet. Die Antriebseinrichtung 210 hingegen ist, wie erwähnt, außerhalb des Pumpengehäuses 201 angeordnet, hier z.B. oben auf. Der Pumpenauslass 266 ist hier beispielhaft in dem Stützring 223 angeordnet oder eingebracht.

Das Pumpengehäuse 220 weist, wie erwähnt, den Pumpeneinlass 261 auf. Die Pumpe 200 ist derart ausgebildet, dass zu förderndes Fluid H2 über den Pumpeneinlass 261 zu den Fördereinheiteneinlässen bringbar oder führbar ist. Dies erfolgt in dem gezeigten Beispiel dadurch, dass die Fördereinheiteneinlässe, insbesondere auch die mehreren Fördereinheiten (im gesamten) und wenigstens ein Teil der Sammelleitung zum Fördern von Fluid in dem Fluid (mittels der gestrichelten Linie ist in den Figuren 2a, 2b beispielhaft der Flüssigkeitslevel von flüssigem Fluid H2 angedeutet) untergetaucht anordenbar sind. Durch den Pumpeneinlass 261 eintretendes Fluid sammelt sich damit im Fördereinheitenaufnahmeabschnitt 221, wie in Figur 2a zu sehen, und kann auf diese Weise über die Fördereinheiteneinlässe in die Fördereinheiten (bzw. deren Fördervolumina) eindringen, insbesondere jeweils bei einem Ladehub.

Der Pumpeneinsatz 202 weist beispielhaft mehrere Zugstangenhülsen auf, die zwischen der Antriebseinrichtung 210 und den mehreren Fördereinheiten 231, 232, 233 angeordnet sind. Zudem weist der Pumpeneinsatz 202 beispielhaft eine Dichtscheibe 254 auf. Beispielhaft ist eine Zugstangenhülse 255 gezeigt, die die Zugstange 251 umgibt und mittels welcher die Dichtscheibe 254 mit der Antriebseinrichtung 210 verbunden ist. Entsprechend können weitere Zugstangenhülsen für die weiteren Zugstangen vorgesehen sein. Zudem ist beispielhaft eine Zugstangenhülse 256 gezeigt, die ebenfalls die Zugstange 251 umgibt und mittels welcher die Dichtscheibe 254 mit der Fördereinheit 231 verbunden ist. Entsprechend können weitere Zugstangenhülsen für die weiteren Zugstangen vorgesehen sein. Auf diese Weise sind die Fördereinheiten über die mehreren Zugstangenhülsen zumindest mittelbar an der Antriebseinrichtung 210 befestigt, insbesondere aufgehängt.

Die Dichtscheibe 254 kann dabei insbesondere derart geformt oder ausgebildet sein, dass sie den Fördereinheitenaufnahmeabschnitt 221 abdichtet, und zwar gegen den Zugabschnitt 222. Damit wird innerhalb des Zugabschnitts 221 und um die Zugstangenhülsen (soweit diese innerhalb des Zugabschnitts sind) ein Raum 226 gebildet. Der Raum 226 ist dabei insbesondere mit einer nur Flüssigkeit abschirmenden, aber nicht gasdichtenden Dichtung gegen den typischerweise kalten Fördereinheitenaufnahmeabschnitt 221 abgedichtet. Damit füllt sich der Raum 226 beim Betrieb der Pumpe dann insbesondere mit relativ warmem gasförmigem Fluid, was zu einer thermischen Isolationsschicht zwischen dem flüssigen Wasserstoff im Fördereinheitenaufnahmeabschnitt 221 und dem oberen Teils des Pumpengehäuses 201, dem Flansch 224 und dem Stützring 223 führt. Ohne diese Isolation würden die genannten Stelle sehr kalt werden und insbesondere die Dichtung 257 könnte aufgrund der Kälte undicht werden.

Der Pumpeneinsatz 202 weist zudem mehrere Dichtungen auf, mittels welcher die Zugstangen innerhalb einer Zugstangenhülse abgedichtet sind. Dabei ist beispielhaft für die Zugstangenhülse 255 eine Dichtungen 258 unten im kalten Bereich und eine Dichtung 257 oben im warmen Bereich vorgesehen; dies gilt entsprechend für die weiteren Zugstangenhülsen (zwischen Dichtscheibe und Antriebseinrichtung). Bei den Dichtungen 258 kann es sich z.B. um Buchsen handeln, bei den Dichtungen 257 um sog. Stopfbuchsen. Damit wird das kalte Fluid im Innenbehälter möglichst gut abgedichtet oder ggf. angewärmt, und zwar bis zur oberen Dichtung 257

Durch die mehreren Fördereinheiten 231, 232, 233 ist es möglich, ein insgesamt größeres Fördervolumen zu schaffen, um so eine höhere Förderrate der Pumpe 200 zu ermöglichen. Trotzdem erlaubt das Prinzip der Kolbenpumpe eine einfache und robuste Funktionsweise, während andere Pumpenarten wie Rotationspumpen komplizierter und fehleranfälliger sind.

Lange Kolbenstangen 251, 252, 253 wiederum bewirken, dass die Antriebseinrichtung 210 möglichst weit von den Fördereinheiten 231, 232, 233 beabstandet angeordnet werden kann, was eine Reduzierung eines Wärmeeintrags der Antriebseinrichtung 210 auf das mittels der Fördereinheiten zu fördernde, kryogene Fluid ermöglicht. Vorzugsweise ist die Antriebseinrichtung beabstandet von den mehreren Fördereinheiten angeordnet, vorzugsweise mit einem Abstand x. Der Abstand x, wie in Figur 2a beispielhaft angedeutet, sollte z.B. zumindest so groß sein, dass die Fördereinheiten, insbesondere auch deren Fördereinheiteneinlässe, ausreichend weit in das kryogene Fluid H2 eingetaucht bzw. dort untergetaucht werden können, andererseits aber die Antriebseinheit das kryogene Fluid H2 z.B. nicht berührt. Je nach Bedarf kann der Abstand x, der auch die Länge der Kolbenstangen bestimmt, so groß gewählt werden, dass der Wärmeeintrag über die Kolbenstangen in das kryogene Fluid H2 hinreichend klein wird.

Beim Eintritt in die Pumpe 200 bzw. die Fördereinheiten befindet sich das kryogene Fluid, z.B. Wasserstoff, nämlich in der Regel nahe des Siedepunkts oder am Siedepunkt. Um ein Sieden von Wasserstoff zu vermeiden, muss der Wärmeeintrag in die Pumpe oder zumindest die Fördereinheiten minimiert werden, was durch die Verwendung sehr langer Kolbenstangen erreicht werden kann. Eine große Länge der Kolbenstangen reduziert den Wärmeeintrag aufgrund einer langen Wärmeleitstrecke.

Beispielsweise kann Pumpe 200 derart eingerichtet sein, dass die Kolben 241, 242, 243 synchron und zueinander zeitlich versetzt bewegt werden. Dies kann z.B. durch entsprechende Anbindung der Kolbenstangen an die Antriebseinrichtung 210 sowie ggf. eine geeignete Ausbildung der Antriebseinrichtung erreicht werden. So kann die Antriebseinrichtung z.B. eine geeignete Kurbelwelle aufweisen, an der die Kolbenstangen entsprechend angebunden sind. Dies führt zu einer synchronisierten Bewegung, z.B. Sinus-Bewegung, der Kolben, jeweils mit einer gewissen Zeitverzögerung zwischen den einzelnen Kolben. Dadurch kann eine möglichst kontinuierliche und gleichmäßige Durchflussmenge von Fluid H2 am Pumpenauslass 222 erzeugt werden.

Zum Fördern des Fluids kann die Pumpe 200 derart angeordnet und betrieben werden, dass zumindest die Fördereinheiteneinlässen der mehreren Fördereinheiten, vorzugsweise die mehreren Fördereinheiten selbst, in dem kryogenen Fluid H2 untergetaucht sind. Die Antriebseinrichtung 210 hingegen befindet sich außerhalb bzw. hier oberhalb des kryogenen Fluids H2. Eine solche Situation ist in Figur 2a gezeigt. Auf diese Weise kann Pumpe 200 sofort anlaufen und es ist keine Abkühlungszeit beim Anlaufen der Pumpe erforderlich ist.

Die Pumpe kann z.B. eine Förderrate von 400 bis 600 kg/h an kryogenem Fluid H2 erreichen, und zwar bei einer Betriebsfrequenz von 1,5 bis 3 Hz. Dies bedeutet, dass das gesamtes Fördervolumen der mehreren Fördereinheiten in etwa 1,5 I aufweist; dies wiederum teilt sich z.B. gleichmäßig auf die drei Fördereinheiten 231, 232, 233 auf und wird durch geeignete Werte für Durchmesser d und Kolbenhub h erreicht. Die geringe Betriebsfrequenz der Pumpe 200 bedeutet eine langsame Bewegung der Kolben in den Zylindern. Die Vorteile der langsamen Bewegung in Kombination mit den entsprechenden Fördervolumina sind ein relativ geringer Wärmeeintrag durch Reibung und ein hoher Beladungsgrad der Zylinder mit Fluid aufgrund der geringen Fließgeschwindigkeit des Fluids, wenn dieses z.B. in die Fördereinheiten (d.h. in die Fördereinheiteneinlässe) strömt. Es sei erwähnt, dass bevorzugt die Betriebsfrequenz der Pumpe je nach gefordertem Massenstrom z.B. zwischen 0 Hz und z.B. 2 oder 3 Hz frei geregelt werden kann, z.B. während der Betankung eines Fahrzeug.

Anhand der Figuren 2b und 2c ist zudem zu sehen, dass der Pumpeneinsatz 202 aus dem Pumpengehäuse 201 entnehmbar sein kann, z.B. zum Austausch oder zu Wartungszwecken.

## Patentansprüche

1. Pumpe (200) zum Fördern eines kryogenen Fluids (H2), insbesondere Wasserstoff, wobei die Pumpe (200) ein Pumpengehäuse (201) und einen Pumpeneinsatz (202) aufweist,
wobei das Pumpengehäuse (201) einen Außenbehälter (220) und einen Innenbehälter (221, 222) aufweist, wobei zwischen dem Außenbehälter (220) und dem Innenbehälter (221, 222) ein Raum (225) gebildet ist, der evakuiert oder evakuierbar ist, wobei das Pumpengehäuse (201) einen Pumpeneinlass (261) aufweist, über den zu förderndes Fluid in den Innenbehälter (221, 221) bringbar ist,
wobei der Pumpeneinsatz (202) mehrere Fördereinheiten (231, 232, 233), eine Antriebseinrichtung (210), mehrere Kolbenstangen (251, 252, 253) und eine Sammelleitung (262) aufweist,
wobei die mehreren Fördereinheiten und wenigstens ein Teil der Sammelleitung innerhalb des Innenbehälters (221, 222) angeordnet sind, und wobei die Antriebseinrichtung (210) außerhalb des Pumpengehäuses (201) angeordnet ist,
wobei jede Fördereinheit jeweils einen Kolben (241) und einen Zylinder (240) aufweist, wobei die Antriebseinrichtung (210) über jeweils eine der mehreren Kolbenstangen an jeweils einen der mehreren Kolben angebunden ist, und wobei die Pumpe (200) eingerichtet ist, mittels der Antriebseinrichtung (210) jeden der mehreren Kolben innerhalb des jeweiligen Zylinders hin und her zu bewegen, wobei die Pumpe für eine Förderung von Fluid über eine Zugbewegung der Kolbenstangen ausgebildet ist,
wobei der Pumpeneinsatz (202) einen Pumpenauslass (222) aufweist, und wobei jede der mehreren Fördereinheiten (231, 232, 233) jeweils einen Fördereinheiteneinlass (242) und einen Fördereinheitenauslass (243) für das Fluid aufweist, wobei die Fördereinheitenauslässe an die Sammelleitung angebunden sind, und wobei die Fluidsammelleitung derart ausgebildet ist, dass die Fördereinheitenauslässe in den Pumpenauslass (222) münden, über den mittels der Pumpe (200) gefördertes Fluid (H2) bereitstellbar ist,
wobei die Pumpe (200) derart ausgebildet ist, dass die mehreren Fördereinheiten (231, 232, 233) und wenigstens ein Teil der Sammelleitung (224) zum Fördern von Fluid in dem Fluid (H2) untergetaucht anordenbar ist,
wobei der Pumpeneinsatz(202) mehrere Zugstangenhülsen (255) aufweist, die zwischen der Antriebseinrichtung und den mehreren Fördereinheiten angeordnet sind, wobei zumindest ein Abschnitt einer jeden der mehreren Zugstangen innerhalb zumindest einer jeweiligen der mehreren Zugstangenhülsen angeordnet ist, und wobei die mehreren Fördereinheiten über die mehreren Zugstangenhülsen zumindest mittelbar an der Antriebseinrichtung befestigt, insbesondere aufgehängt, sind,
wobei der Pumpeneinsatz (202) mehrere Dichtungen aufweist, wobei jede der mehreren Zugstangen jeweils mit wenigstens einer der mehreren Dichtungen innerhalb zumindest einer jeweiligen der mehreren Zugstangenhülsen abgedichtet ist, und
wobei der Innenbehälter einen Zugabschnitt (222) und einen Fördereinheitenaufnahmeabschnitt (221) aufweist, wobei der Fördereinheitenaufnahmeabschnitt mittels des Zugabschnitts an einer Oberseite des Außenbehälters aufgehängt ist.

2. Pumpe (200) nach Anspruch 1, wobei zumindest eine der mehreren Fördereinheiten derart eingerichtet ist, dass in dem jeweiligen Zylinder (240) vorhandenes, gasförmiges Fluid bei einem Ladehub aus der jeweiligen Fördereinheit entweichen kann.

3. Pumpe (200) nach Anspruch 2, wobei der jeweilige Zylinder (240) einen Zylinderkopf (245.1) und eine Schiebehülse (249) aufweist, und derart ausgebildet ist, dass bei dem Ladehub ein Entgasungsspalt (248.1) zwischen dem Zylinderkopf (245.1) und der Schiebehülse (249) gebildet wird, über den das gasförmige Fluid entweichen kann.

4. Pumpe (200) nach Anspruch 2 oder 3, wobei die jeweilige Fördereinheit ein während des Ladehubs aktiv oder passiv öffnendes Ventil aufweist, über das das gasförmige Fluid entweichen kann, wobei das Ventil insbesondere in dem Fördereinheiteneinlass (242) der jeweiligen Fördereinheit angeordnet ist.

5. Pumpe (200) nach einem der vorstehenden Ansprüche, wobei die Antriebseinrichtung (210) mit einem Abstand (x) von wenigstens 400mm, vorzugsweise wenigstens 600mm, beabstandet von den mehreren Fördereinheiten (231, 232, 233) angeordnet ist.

6. Pumpe (200) nach einem der vorstehenden Ansprüche, die derart eingerichtet ist, dass die mehreren Kolben (241) synchron und zueinander zeitlich versetzt bewegt werden.

7. Pumpe (200) nach einem der vorstehenden Ansprüche, die für einen Betrieb mit einer Bewegung der Kolben in senkrechter Richtung eingerichtet ist.

8. Pumpe (200) nach einem der vorstehenden Ansprüche, wobei der Pumpeneinsatz (202) eine Dichtscheibe (254) aufweist, durch die die mehreren Zugstangen geführt sind, wobei die Dichtscheibe den Fördereinheitenaufnahmeabschnitt (221) gegen den Zugabschnitt (222) abdichtet. insbesondere nur Flüssigkeit abschirmend, aber nicht gasdicht.

9. Pumpe (200) nach einem der vorstehenden Ansprüche, wobei das Pumpengehäuse (220) einen Gasauslass aufweist, über den gasförmiges Fluid aus den Innenbehälter (221, 221) ausbringbar ist.

10. Pumpe (200) nach einem der vorstehenden Ansprüche, wobei der Pumpeneinsatz (202) entnehmbar in dem Pumpengehäuse (201) angeordnet ist.

11. Pumpe (200) nach einem der vorstehenden Ansprüche, die ein gesamtes Fördervolumen der mehreren Fördereinheiten von mehr als 1,5 I aufweist.

12. Verfahren zum Fördern eines kryogenen Fluids (H2), insbesondere Wasserstoff, mittels einer Pumpe (200) nach einem der vorstehenden Ansprüche.

13. Verfahren nach Anspruch 12, wobei die Pumpe (200) derart angeordnet und betrieben wird, dass zumindest die Fördereinheiteneinlässe (242), vorzugsweise die mehreren Fördereinheiten (231, 232, 233), in dem kryogenen Fluid (H2) untergetaucht sind, und dass sich die Antriebseinrichtung (210) außerhalb des kryogenen Fluids befindet.

14. Verfahren nach Anspruch 12 oder 13, wobei die Pumpe (200) mit einer Betriebsfrequenz von höchstens 5 Hz, bevorzugt höchstens 3 Hz, betrieben wird.

15. Verfahren nach einem der Ansprüche 12 bis 14, wobei das kryogene Fluid (H2) mittels der Pumpe (200) mit einer Förderrate von wenigstens 200 kg/h, bevorzugt wenigstens 300 kg/h, weiter bevorzugt wenigstens 400 kg/h, gefördert wird, und wobei insbesondere das kryogene Fluid mittels der Pumpe (200) bei einem Druck von höchstens 20 bar gefördert wird .
